# EUROPÄISCHE PATENTSCHRIFT

(11) **EP 0 844 165 B1**
(45) Veröffentlichungstag und Bekanntmachung des Hinweises auf die Patenterteilung: **30.01.2002**
(21) Anmeldenummer: 97119301.6
(22) Anmeldetag: 05.11.1997
(51) Int. Cl.: B62D 25/20

(54) **Bodengruppe für eine Kraftfahrzeugkarosserie**
Underbody of a passenger car
Bas de caisse de voiture de tourisme

(30) Priorität: 14.11.1996 DE 19647104
(43) Veröffentlichungstag der Anmeldung: 27.05.1998
(73) Patentinhaber: ADAM OPEL AG, 65423 Rüsselsheim (DE)
(72) Erfinder: Mildner, Udo, Dipl.-Ing., 65550 Limburg (DE); Schönig, Horst, 65428 Rüsselsheim (DE); Ringel, Franz-Josef, 55129 Mainz-Hechtsheim (DE)

(56) Entgegenhaltungen:
- FR-A- 1 226 451
- FR-A- 2 493 792
- US-A- 4 493 506
- US-A- 5 388 885
- PATENT ABSTRACTS OF JAPAN vol. 010, no. 051 (M-457), 28.Februar 1986 & JP 60 199774 A (GAREEJI TARUGA:KK), 9.Oktober 1985,

## Beschreibung

Die Erfindung betrifft eine Bodengruppe für eine Kraftfahrzeugkarosserie gemäß dem Oberbegriff des Anspruchs 1.

Bei Bodengruppen heutiger Kraftfahrzeugkarosserien ist der Schweller in der Regel als Hohlprofil ausgebildet und weist an seinem an dem Bodenblech angrenzenden Bereich ein annähernd vertikal verlaufendes Blechprofil auf. Auf dem mittleren Bereich des Schwellers ist eine B-Säule befestigt, die eine Öffnung für eine Fahrer- oder Beifahrertür in der Kraftfahrzeugkarosserie nach hinten hin begrenzt. Das Bodenblech hat eine Abwinklung, mit der es an dem Schweller befestigt ist. Hierdurch ist die Bodengruppe der Kraftfahrzeugkarosserie sehr einfach aufgebaut und weist in ihrer Längsrichtung eine hohe Stabilität auf.

Nachteilig bei den bekannten Bodengruppen ist, daß sich der Schweller bei einem Seitenaufprall oder sogar Offsetcrash sehr leicht verdrehen kann. Nach einem geringfügigen Verdrehen des Schwellers gegenüber dem Bodenblech werden die beim Seitenaufprall einwirkenden Kräfte nicht mehr gleichmäßig in das Bodenblech eingeleitet. Anschließend dringt der Schweller oder die B-Säule in den Innenraum des Kraftfahrzeuges ein. Für einen Insassen des Kraftfahrzeuges, der sich auf einem an dem Bodenblech in der Nähe des Schwellers befestigten Sitz befindet, besteht deshalb ein erhöhtes Verletzungsrisiko.

Man könnte daran denken, den Schweller und das Bodenblech stärker zu dimensionieren, jedoch führt dies nur unwesentlich zu einer Verringerung der Eindringtiefe des Schwellers oder der B-Säule in den Innenraum, da sich der Schweller dennoch verdrehen kann.

Es wurde auch schon vorgeschlagen, daß der Schweller mit seinem oberen Bereich eine weitere Verbindung über ein nach innen hin um einen Winkel von weniger als 75° geneigt angeordnetes Stützprofil mit dem Bodenblech hat (US-PS 4 493 506). Das Stützprofil ist dabei als separates, an dem Bodenblech und dem Schweller und/oder der B-Säule zu befestigendes Bauteil ausgebildet.

Durch diese Gestaltung wird der Schweller an seinem oberen und an seinem unteren Bereich gegen das Bodenblech abgestützt. Hebelkräfte von auf den Schweller wirkenden Drehmomenten werden von dem Stützprofil in das Bodenblech eingeleitet und können nicht mehr zu einem Verdrehen des Schwellers führen. Der Schweller dringt deshalb bei einem Seitenaufprall weniger weit in den Innenraum des Kraftfahrzeuges ein als der Schweller der bekannten Bodengruppe.

In der FR 2 493 792 wird schon vorgeschlagen, auf einem solchen Stützprofil eine an der Seitenwand des Fahrzeuges befestigte Sitzschiene aufzulegen.

Die Erfindung beruht auf der Aufgabe, den Schutz der Insassen noch weiter zu verbessern.

Es wird daher vorgeschlagen, daß bei einer Bodengruppe gemäß dem Oberbegriff des Anspruchs 1 das Stützprofil Aufnahmen für Halterungen einer Sitzbefestigung eines Sitzes aufweist und daß das Stützprofil an einer Querstrebe befestigt ist, die unterhalb des Sitzes verläuft, dessen Befestigung an den Halterungen erfolgt.

Damit ist sichergestellt, daß gerade im Bereich des Sitzes eine ausreichende Querversteifung der Fahrgastzelle erfolgt.

Das Stützprofil könnte über die gesamte Länge des Schwellers eine gleichmäßige Neigung aufweisen. Dies führt jedoch zu einer unnötigen Einengung der seitlichen Bereiche des Fußraums des Kraftfahrzeuges. Das Stützprofil verhindert zuverlässig ein Verdrehen des Schwellers, ohne daß der Fußraum unnötig eingeengt wird, wenn sich das Stützprofil über nahezu der gesamten Länge des Schwellers erstreckt und im Bereich einer B-Säule oder in seinem mittleren Bereich einen kleineren Neigungswinkel aufweist als in seinen Endbereichen. Der kleinere Neigungswinkel im mittleren Bereich oder im Bereich der B-Säule führt in der Regel nicht zu einer Einengung des Fußraums, da in diesem Bereich häufig Sitze des Kraftfahrzeuges befestigt werden.

Das Stützprofil läßt sich gemäß einer vorteilhaften Weiterbildung der Erfindung kostengünstig herstellen, wenn es als Teil eines den Schweller zum Innenraum hin begrenzenden Bleches ausgebildet ist. Da dieses Blech ohnehin vorhanden ist, führt diese Gestaltung nicht zu einer Erhöhung des Gewichts der Bodengruppe der Kraftfahrzeugkarosserie.

Im Bereich der B-Säule können besonders hohe Drehmomente auf den Schweller einwirken. Die erfindungsgemäße Bodengruppe der Kraftfahrzeugkarosserie nimmt besonders hohe Drehmomente auf, ohne daß es zu einem Verdrehen des Schwellers kommt, wenn auf der Oberseite des Schwellers im Bereich der B-Säule ein weiteres Profil angeordnet ist, welches annähernd denselben Neigungswinkel wie das Stützprofil aufweist.

Ein Kontakt der Insassen des Kraftfahrzeuges mit seitlichen Bauteilen der Kraftfahrzeugkarosserie wird bei einem Seitencrash zuverlässig vermieden, wenn das Stützprofil gemäß einer vorteilhaften Weiterbildung der Erfindung Aufnahmen für Halterungen einer Sitzbefestigung eines Sitzes aufweist. Hierdurch werden die Halterungen der Sitze bei einem Eindringen des Schwellers ebenfalls in das Fahrzeuginnere bewegt, so daß sich bei dem Seitencrash der Abstand der Insassen zu seitlichen Bauteilen der Kraftfahrzeugkarosserie beispielsweise zur B-Säule nur unwesentlich verringert.

Versuche haben gezeigt, daß die bei einem Crash auf den Schweller wirkenden Kräfte zuverlässig in das Bodenblech eingeleitet werden, wenn der Neigungswinkel des Stützprofils im mittleren Bereich und/oder im Bereich der B-Säule ungefähr 60° beträgt.

Die Erfindung läßt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig. 1:: einen Schnitt durch einen Schweller und ein Bodenblech vor einer B-Säule,
- Fig. 2:: eine perspektivische Darstellung eines Schwellers mit einem Querträger,
- Fig. 3:: eine perspektivische Darstellung eines Schwellers und einer B-Säule mit einem Stützprofil.

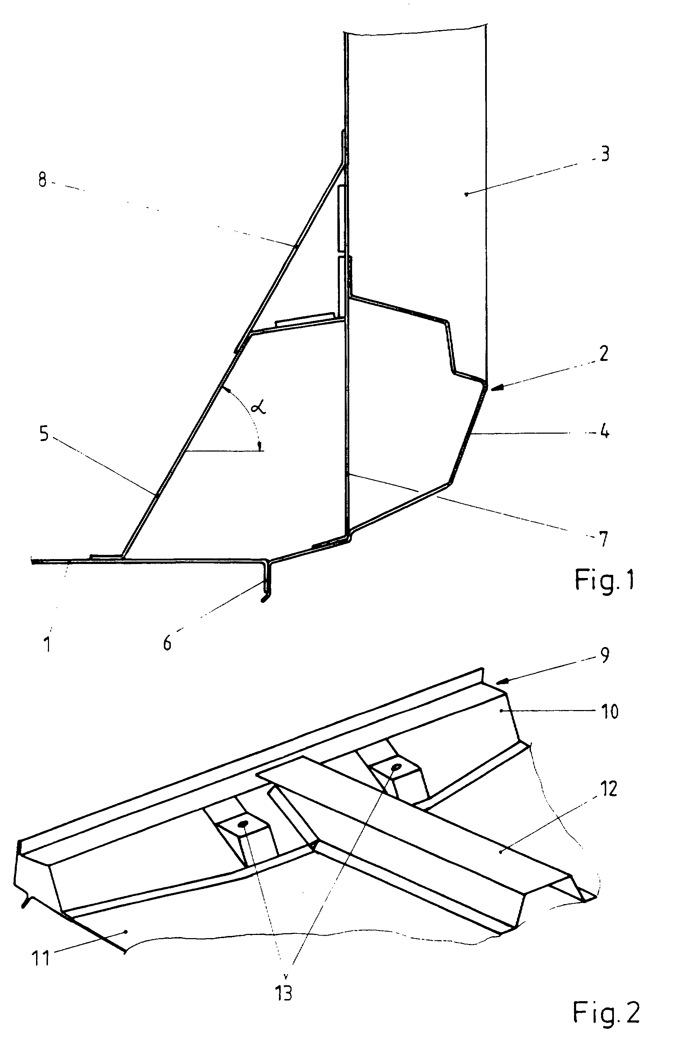

Die Figur 1 zeigt einen an einem Bodenblech 1 befestigten Schweller 2 eines linken Bereichs einer Bodengruppe einer Kraftfahrzeugkarosserie. Der Schweller 2 ist in der Zeichnung unmittelbar vor einer eine Türöffnung nach hinten hin begrenzenden B-Säule 3 geschnitten dargestellt. Der Schweller 2 hat ein Außenblech 4 und ein den Schweller 2 zum Innenraum des Kraftfahrzeuges hin begrenzendes Stützblech 5. Das Außenblech 4 ist mit seinem unteren Ende an einer Abwinklung 6 des Bodenblechs 1 befestigt. Weiterhin erkennt man in Figur 1, daß innerhalb des Schwellers 2 eine innere Seitenwand 7 angeordnet ist.

Das Stützblech 5 ist um den Winkel α, der hier etwa 60° beträgt, geneigt. Auf dem Schweller 2 ist ein Profil 8 befestigt, welches um den gleichen Winkel geneigt ist wie das Stützblech 5. Bei einem Crash des Kraftfahrzeuges werden auftretende Kräfte über das Außenblech 4 des Schwellers 2 auf die Abwinklung 6 des Bodenblechs 1 übertragen. Das Stützblech 5 stützt sich dabei an einer von der Abwinklung 6 entfernten Stelle des Bodenblechs 1 ab. Hierdurch wird ein Verdrehen des Schwellers 2 weitgehend verhindert.

Die Figur 2 zeigt einen Schweller 9, bei dem ein Stützblech 10 in seinem mittleren Bereich um einen flacheren Winkel geneigt ist als an seinen Endbereichen. Das Stützblech 10 ist an einem Bodenblech 11 und an einer unterhalb von nicht dargestellten Sitzen angeordneten Querstrebe 12 befestigt. Weiterhin sind auf dem Stützblech 10 Aufnahmen 13 für Halterungen einer Sitzbefestigung angeordnet.

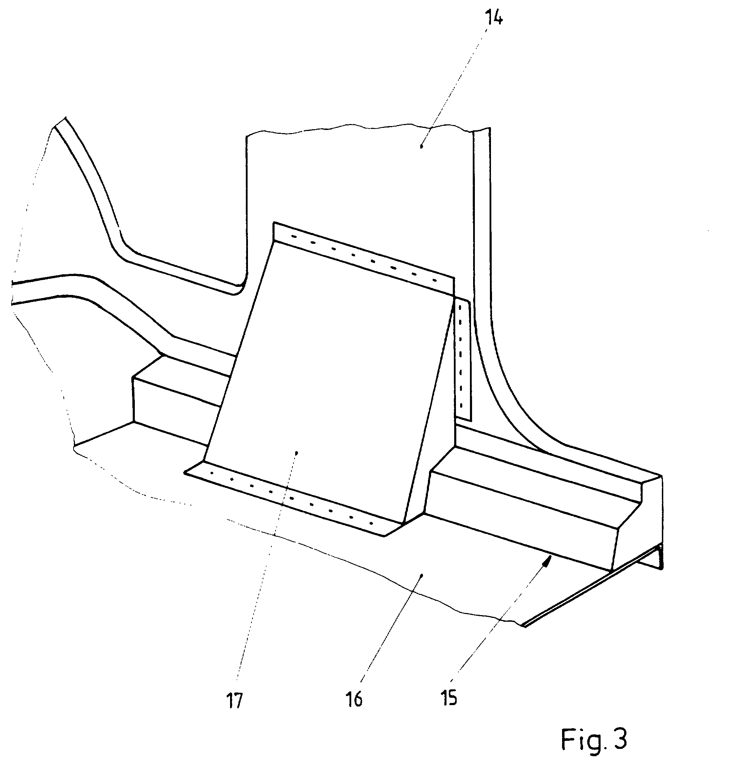

Die Figur 3 zeigt in einer perspektivischen Darstellung eine B-Säule 14 einer Kraftfahrzeugkarosserie mit einem Schweller 15 und einem Bodenblech 16. Von dem Bodenblech 16 bis zu der B-Säule 14 erstreckt sich ein als separat zu befestigendes Bauteil ausgebildetes Stützblech 17. Das Stützblech 17 ist um denselben Winkel geneigt wie das Stützblech 5 aus Figur 1.

## Patentansprüche

1. Bodengruppe für eine Kraftfahrzeugkarosserie mit einem die Kraftfahrzeugkarosserie seitlich begrenzenden Schweller und mit einem an dem unteren Bereich des Schwellers befestigten Bodenblech, wobei der Schweller (2, 9, 15) mit seinem oberen Bereich eine weitere Verbindung über ein nach innen hin um einen Winkel von weniger als 75° geneigt angeordnetes Stützprofil (5, 10, 17) mit dem Bodenblech (1, 11, 16) hat und wobei das Stützprofil (17) als separates, an dem Bodenblech (16) und dem Schweller (15) und/oder der B-Säule (14) zu befestigendes Bauteil vorgesehen ist, **dadurch gekennzeichnet, daß** das Stützprofil (10) Aufnahmen (13) für Halterungen einer Sitzbefestigung eines Sitzes aufweist und daß das Stützprofil an einer Querstrebe befestigt ist, die unterhalb des Sitzes verläuft, dessen Befestigung an den Halterungen erfolgt.

2. Bodengruppe für eine Kraftfahrzeugkarosserie nach Anspruch 1, **dadurch gekennzeichnet, daß** sich das Stützprofil (10) über nahezu der gesamten Länge des Schwellers (9) erstreckt und im Bereich der B-Säule oder in seinem mittleren Bereich einen kleineren Neigungswinkel aufweist als in seinen Endbereichen.

3. Bodengruppe für eine Kraftfahrzeugkarosserie nach Anspruch 1 oder 2, **dadurch gekennzeichnet, daß** der Neigungswinkel des Stützprofils (5, 10, 17) im mittleren Bereich und/oder im Bereich der B-Säule (3, 14) ungefähr 60° beträgt.

4. Bodengruppe für eine Kraftfahrzeugkarosserie nach zumindest einem der vorhergehenden Ansprüche, **dadurch gekennzeichnet, daß** auf der Oberseite des Schwellers (2) im Bereich der B-Säule (3) ein weiteres Profil (8) angeordnet ist, welches annähernd denselben Neigungswinkel wie das Stützprofil (5) aufweist.

## Claims

1. Floor assembly for a motor vehicle body with a sill laterally defining the motor vehicle body and with a floor panel attached to the lower region of the sill, wherein the sill (2, 9, 15) with its upper region has a further connection to the floor panel (1, 11, 16) via a supporting profile (5, 10, 17) inclined inwardly by an angle of less than 75° and wherein the supporting profile (17) is provided as a separate structural member to be attached to the floor panel (16) and the sill (15) and/or the B-pillar (14), **characterised in that** the supporting profile (10) comprises receptacles (13) for mountings of a seat fastening for a seat and **in that** the supporting profile is attached to a cross strut which runs below the seat which is attached to the mountings.

2. Floor assembly for a motor vehicle body according to claim 1, **characterised in that** the supporting profile (10) extends over nearly the whole length of the sill (9) and has a smaller angle of inclination in the region of the B-pillar or in its central region than in its end regions.

3. Floor assembly for a motor vehicle body according to claim 1 or 2, **characterised in that** the angle of inclination of the supporting profile (5, 10, 17) is approximately 60° in the central region and/or in the region of the B-pillar (3, 14).

4. Floor assembly for a motor vehicle body according to one or more of the preceding claims, **characterised in that** on the upper side of the sill (2) in the region of the B-pillar (3) is arranged a further profile (8) which has approximately the same angle of inclination as the supporting profile (5).

## Revendications

1. Bas de caisse de véhicule automobile comprenant une longeron délimitant latéralement le bas de caisse et une tôle de plancher fixée à la zone inférieure du longeron, le longeron (2, 9, 15) présentant, dans sa zone supérieure, une liaison supplémentaire avec la tôle de plancher (1, 11, 16) en passant par un profilé de support (5, 10, 17) incliné vers l'intérieur sous un angle de moins de 75° et le profilé de support (17) étant prévu sous forme de composant séparé à fixer à la tôle de plancher (16) et au longeron (15) et/ou au montant B (14), **caractérisé par le fait que** le profilé de support (10) présente des logements (13) pour des moyens de fixation d'un siège et que le profilé de support est fixé à une traverse qui s'étend en dessous du siège dont la fixation s'effectue sur lesdits moyens.

2. Bas de caisse de véhicule automobile selon la revendication 1, **caractérisé par le fait que** le profilé de support (10) s'étend sur presque toute la longueur du longeron (9) et présente dans la zone du montant B ou dans sa zone médiane un angle d'inclinaison plus faible que dans ses zones d'extrémités.

3. Bas de caisse de véhicule automobile selon la revendication 1 ou 2, **caractérisé par le fait que** l'angle d'inclinaison du profilé de support (5, 10, 17), dans la zone médiane et/ou dans la zone du montant B (3, 14), est d'environ 60°.

4. Bas de caisse de véhicule automobile selon au moins l'une des revendications précédentes, **caractérisé par le fait que** sur le côté supérieur du longeron (2), dans la zone du montant B (3), est disposé un profilé supplémentaire (8) qui présente sensiblement le même angle d'inclinaison que le profilé de support (5).
